# FASCICULE DE BREVET EUROPEEN

(11) **EP 3 857 842 B1**
(45) Date de publication et mention de la délivrance du brevet: **02.08.2023**
(21) Numéro de dépôt: 19773089.8
(22) Date de dépôt: 25.09.2019
(51) Int. Cl.: H04L 9/40, H04W 12/63, H04W 12/69, H04W 12/77, H04W 12/06, H04W 12/08, E03B 9/02, H04W 4/02, A62C 37/50, A62C 35/20, B62H 5/02, B62H 5/20

(54) **PROCEDE D'ACTIVATION D'UN SERVICE, PROCEDE D'ACTIVATION D'UNE BOUCHE D'INCENDIE, DISPOSITIF ET SYSTEME ASSOCIES**
VERFAHREN ZUR AKTIVIERUNG EINES DIENSTES, VERFAHREN ZUR AKTIVIERUNG EINES FEUERHYDRANTEN, ZUGEHÖRIGE VORRICHTUNG UND SYSTEM
METHOD FOR ACTIVATING A SERVICE, METHOD FOR ACTIVATING A FIRE HYDRANT, ASSOCIATED DEVICE AND SYSTEM

(30) Priorité: 25.09.2018 FR 1800992
(43) Date de publication de la demande: 04.08.2021
(73) Titulaire: CONSOMIX, 75008 Paris (FR)
(72) Inventeur: MELUL, Meyer, Patrick, 75019 PARIS (FR); MELUL, Dann, 63304 TEL-AVIV (IL)
(74) Mandataire: Pichon, Julien
(86) Numéro de dépôt international: PCT/EP2019/075818
(87) Numéro de publication internationale: WO 2020/064809

(56) Documents cités:
- WO-A1-2017/220911
- CN-A- 106 600 797
- US-A1- 2014 373 941
- US-B1- 8 657 021

## Description

### DOMAINE

Le domaine de l'invention concerne celui des procédés permettant d'activer et désactiver un équipement à distance pour autoriser ou non son utilisation ou pour accéder ou non à un service et/ou pour monitorer l'usage dudit équipement. Le domaine de l'invention traite également des procédés validant l'accès par un contrôle de la position d'un objet. Le procédé de l'invention traite particulièrement d'un dispositif d'accès à un volume d'eau délivré par une bouche incendie. En second lieu l'invention s'applique également à un dispositif d'accès à un vélo accessible à une communauté d'utilisateurs.

### ETAT DE L'ART

Actuellement, il existe un besoin d'utiliser la position comme mot de passe ou comme un élément participant à la création d'un mot de passe pour accéder à un service donné. Toutefois, les solutions actuelles d'accès à un service donné sont basées sur des solutions consommatrices en énergie électrique et qui ne permettent pas de délivrer un service totalement autonome. L'état de la technique est connu, par exemple, de par les documents CN 106 600 797 A, WO 2017/220911 A1, US 2014/373941 A1 et WO 2013/050738 A2, qui traitent de l'accès à des services.

À titre d'exemple, la fourniture d'eau à des utilisateurs temporaires offre des possibilités de suivi limitées. À Paris, la distribution d'eau temporaire, pour des chantiers par exemple, se fait aujourd'hui par l'intermédiaire d'un dispositif physique appelé « Kit de puisage » ou « Kit ». Un tel kit comprend un dispositif de fixation sur Bouches d'incendie raccordées au réseau d'eau non potable et/ou potable de la ville, de la tuyauterie, un compteur d'eau à lecture visuelle et une vanne d'arrêt. Le kit de puisage permet donc de se raccorder à n'importe quelle bouche incendie et de puiser de l'eau. Or, la solution actuelle d'un tel kit présente plusieurs limites.

En premier lieu, il permet de se raccorder à n'importe quelle bouche incendie et de puiser de l'eau sur le réseau sans aucun contrôle de l'exploitant du réseau. En outre, il peut être déplacé d'une bouche incendie à une autre, sans l'avis de l'exploitant du réseau, générant ainsi un danger si les pompiers devaient se raccorder d'urgence sur une borne incendie, appelée « BI », supposée libre, mais en réalité occupée sans autorisation.

Un autre inconvénient est qu'un utilisateur peut conserver un Kit entre deux chantiers générant ainsi de longues périodes d'inutilisation et en conséquence, aucune consommation d'eau ne pouvant donner lieu à facturation sur cette période d'inutilisation.

Du fait d'une défection, le compteur équipant un kit peut, ne plus compter les consommations d'eau, générant ainsi, un manque à gagner pour l'exploitant du réseau de distribution. Seuls un retour en atelier ou le déplacement d'un technicien chez l'utilisateur permettent de s'en rendre compte.

La lecture des consommations d'eau se fait visuellement et nécessite le déplacement d'un opérateur chez l'utilisateur ou la restitution physique du kit à l'exploitant. Ce processus présente les inconvénients suivants :
▪ des risques d'erreur de lecture de l'index du compteur ;
▪ des risques d'erreur de saisie de l'index dans le système dédié à la facturation ;
▪ des déplacements d'opérateurs pour une action à faible valeur ajoutée, à savoir : la lecture de l'index sur le compteur d'eau,
▪ des déplacements difficiles sur des chantiers en hiver ou en période de forte chaleur.

Il existe aujourd'hui des solutions visant à sécuriser par exemple électroniquement l'accès à un service de manière à déporter le contrôle d'accès à distance. Toutefois, ces solutions restent peu attractives du fait que la mise en oeuvre d'un tel contrôle implique une gestion locale de l'énergie nécessaire pour faire fonctionner les composants activant ou désactivant l'accès de l'équipement de raccordement.

### RESUME DE L'INVENTION

L'invention est définie par les revendications indépendantes. Des modes de réalisation préférés sont définis dans les revendications dépendantes.

### BRÈVE DESCRIPTION DES FIGURES

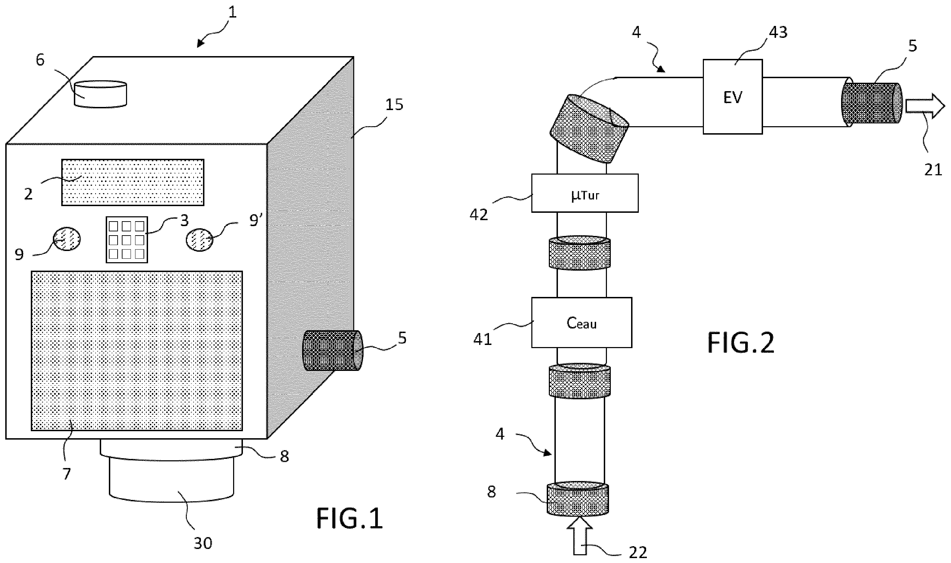

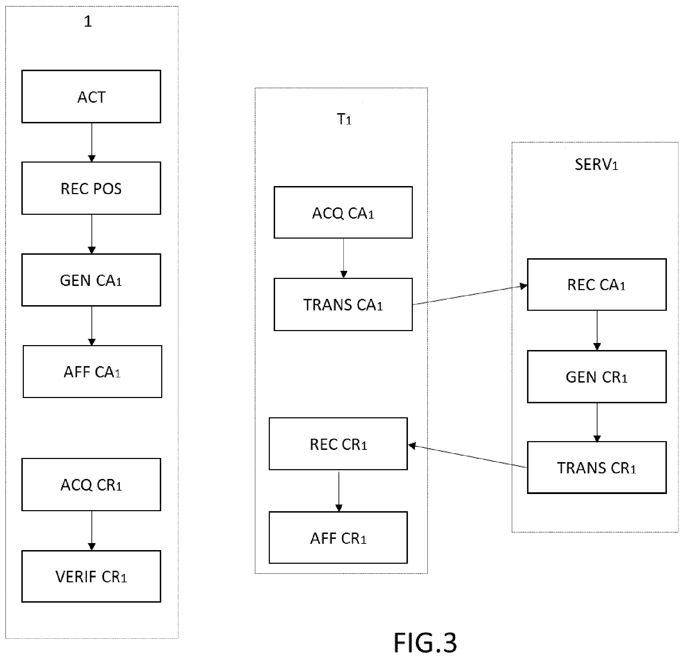

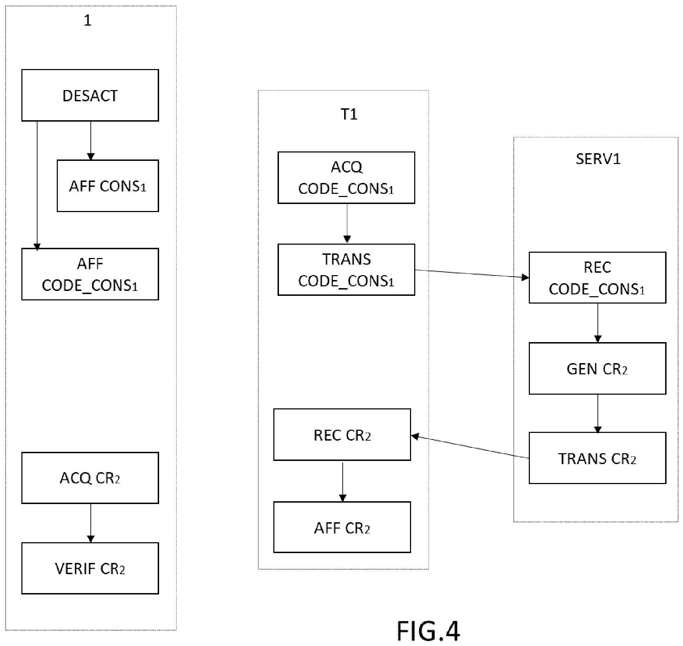

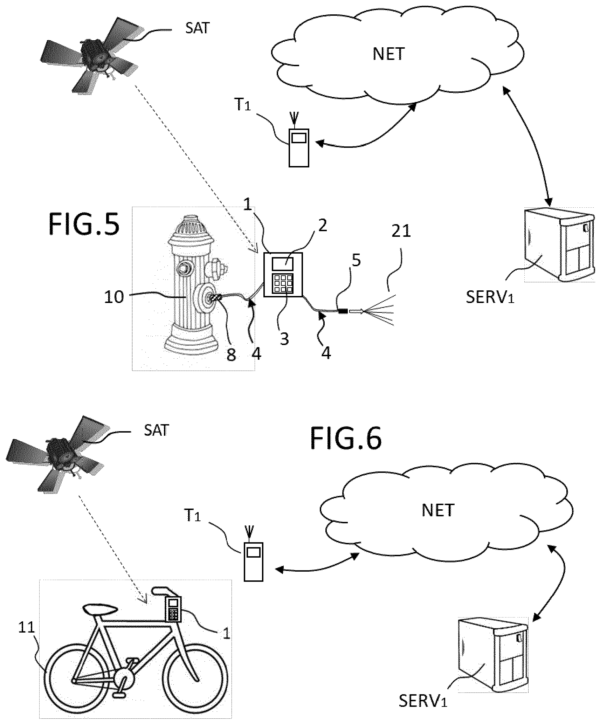

D'autres caractéristiques et avantages de l'invention ressortiront à la lecture de la description détaillée qui suit, en référence aux figures annexées, qui illustrent :
▪ figure 1 : un mode de réalisation d'un dispositif de l'invention ;
▪ figure 2 : un exemple de réalisation d'un ensemble hydraulique d'un dispositif de l'invention ;
▪ figure 3 : les étapes d'un mode de réalisation du procédé d'activation de l'invention ;
▪ figure 4 : les étapes d'un mode de réalisation du procédé de désactivation de l'invention ;
▪ figure 5 : un mode de réalisation d'un système de l'invention dans lequel le dispositif est un dispositif d'accès à une bouche incendie ;
▪ figure 6 : un mode de réalisation d'un système de l'invention dans lequel le dispositif est un dispositif d'accès à un vélo en libre-service.

### DESCRIPTION

Dans la suite de la description, une bouche incendie désigne une prise d'eau ou encore un point d'eau accessible dans un espace non fermé tel qu'un espace public. Cela peut être au niveau d'un trottoir, d'un jardin, d'un parvis, d'une route, d'un port, ou encore de tout autre lieu accessible à un individu. La bouche incendie peut être désignée dans la littérature par différents termes tels qu'une borne d'eau ou d'incendie, un poteau d'incendie, une borne hydrante ou un poteau d'incendie en Suisse, ou encore une borne-fontaine.

La présente description détaille notamment un exemple de réalisation d'un dispositif de l'invention, tel qu'un dispositif adapté pour coopérer avec une bouche d'incendie 10. En outre, un exemple de réalisation d'activation d'un service d'un objet est détaillé, notamment lorsque l'objet est une bouche incendie 10 en considérant les services suivants : accès à l'eau et compteur de consommation.

Selon un autre exemple, le dispositif 1 de l'invention est un dispositif d'accès à un vélo et l'objet est un vélo 11.

L'invention couvre donc un dispositif 1 pouvant être configuré et agencé de différentes manières selon l'objet considéré 10, 11. Le procédé de l'invention comporte également différents modes de mise en oeuvre qui sont détaillés ci-après.

La figure 1 représente un exemple de réalisation d'un dispositif 1 de l'invention. Selon un mode de réalisation, le dispositif 1 est adapté à être connecté à une bouche d'incendie 10. Il comprend une fixation 8 permettant de maintenir ledit dispositif 1 au contact d'une sortie d'eau 30 d'une bouche d'incendie 10. À cet effet, la fixation 8 peut être de forme cylindrique et comprendre un filetage ou un guide de maintien permettant de solidariser la fixation avec la sortie d'eau 30 de la bouche d'incendie 10. La fixation 8 est prolongée par un ensemble hydraulique 4 permettant d'acheminer un volume d'eau prélevé sous pression vers une sortie 5.

Le cas d'exemple du dispositif 1 de l'invention représenté à la figure 1, est particulièrement adapté à une sortie d'eau verticale débouchant au sol. Selon le type de bouche d'incendie 10 concernée, la fixation 8 peut être adaptée et agencée selon d'autres configurations. Selon un autre mode de réalisation, un dispositif d'adaptation (non représenté) peut être combiné au dispositif 1 pour acheminer l'eau prélevée d'une sortie d'eau donnée d'une bouche d'incendie à l'entrée 8 du dispositif 1.

Selon un exemple de réalisation, le dispositif 1 comporte un bâti 15 permettant d'assurer une protection des différents composants, notamment des composants hydrauliques et des composants électroniques.

### Composants électroniques

Selon un mode de réalisation, le dispositif 1 comprend un écran 2 permettant d'afficher un statut d'une commande, un code d'activation, un code réponse ou encore toute autre information devant être communiquée à un utilisateur.

Dans l'exemple représenté à la figure 1, un clavier numérique 3 permet à un utilisateur de saisir un code réponse CR₁, CR₂ émis par un serveur distant et reçu par un terminal mobile T₁. Toute autre information devant être communiquée au dispositif 1 peut être transmise par l'intermédiaire du clavier accessible à l'utilisateur.

Selon un mode de réalisation, le clavier 3 comporte un pavé numérique qui peut être par exemple tactile, haptique ou encore comprendre des touches mécaniques de type pression-poussoir. Selon un exemple de réalisation, un bouton ou interrupteur ON/OFF 9 est accessible à un utilisateur et un bouton d'activation 9' pour obtenir une position GPS est également accessible. Selon un mode de réalisation le bouton 9' est inaccessible à l'utilisateur sans un moyen d'accès à l'intérieur du bâti 15. Dans ce dernier cas, le bouton 9, peut se trouver, par exemple, à l'intérieur du bâti 15. Dans ce dernier cas l'allumage est effectué préalablement à l'activation, lors de la remise du dispositif 1 à l'utilisateur ou lors de la mise en service du dispositif 1. Selon un mode de réalisation, les boutons 9 et 9' peuvent être regroupés en un unique bouton/ interrupteur. Dans ce dernier cas, à l'allumage du dispositif 1, la récupération de la position GPS est réalisée automatiquement par le dispositif 1.

Selon un mode de réalisation, le dispositif 1 de l'invention comprend une antenne 6 pour recevoir au moins un signal de géolocalisation. Selon un exemple, l'antenne peut être intégrée à la puce GPS. Ce signal peut provenir d'un ou plusieurs satellites SAT, d'une cellule GSM, 3G ou 4G ou encore d'un réseau de données sans fil, tel que le réseau WIFI permettant de récupérer des informations de positionnement. À cette fin, le dispositif 1 comprend des moyens de récupération d'une position et de traitement de cette position pour l'enregistrer dans une mémoire dans un format prédéfini.

Le dispositif 1 comporte des composants électroniques permettant de traiter des données de géolocalisation afin d'effectuer des opérations sur lesdites données. Parmi les composants, un calculateur et une mémoire sont au minimum requis afin de réaliser des opérations minimales de traitement sur les données. Selon différents modes de réalisation, des cartes électroniques comportant des microprocesseurs, microcontrôleurs, FPGA, et tout autre composant électronique peuvent être mis en oeuvre dans différents modes de réalisation de l'invention.

Selon un exemple, le dispositif 1 de l'invention comporte une couche logicielle pouvant être exécutée sur un support électronique, tel qu'une carte électronique. La couche logicielle peut être, par exemple, un programme d'ordinateur ou un ensemble de fonctions logicielles configurées pour opérer entre elles afin de traiter les données générées ou reçues par le dispositif 1 de l'invention.

Les fonctions traitées par la couche logicielle sont décrites au regard des différentes mises en oeuvre du procédé d'activation et de désactivation de l'invention.

### Ensemble hydraulique

Dans le cas d'exemple de la figure 1, le dispositif 1 comporte, en outre, un ensemble hydraulique 4 permettant d'acheminer un volume d'eau prélevé 22 d'une bouche incendie 10 vers une sortie 5 vers laquelle on souhaite diriger le débit d'eau sortant 21.

L'ensemble hydraulique 4 comporte différents éléments hydrauliques tels que des tuyaux, des vannes, des raccordements, éventuellement des diviseurs, des éléments d'équilibrage de pression, des éléments de contrôle ou d'orientation du flux du liquide distribué.

Selon un exemple de réalisation, l'ensemble hydraulique 4 comporte un compteur d'eau 41 noté Cₑₐᵤ. Le compteur d'eau 41 permet de mesurer ou d'évaluer une consommation d'eau d'une installation. Un tel compteur d'eau 41 est représenté à la figure 2. Selon différents modes de réalisation, le compteur d'eau 41 est un compteur à vitesse ou à turbine, un compteur volumétrique ou un compteur de calories. Le compteur d'eau 41 peut être un débitmètre.

Un tel compteur d'eau 41 peut être agencé à l'entrée 8 de l'ensemble hydraulique 4 ou en sortie 5 de ce même ensemble 4. Afin de réaliser une bonne évaluation de l'eau consommée, le compteur d'eau Cₑₐᵤ est placé avantageusement au plus proche de l'entrée 8 de l'ensemble hydraulique 4.

Selon un mode de réalisation, l'ensemble hydraulique 4 comporte un dispositif récupérateur d'énergie 42 tel qu'un ensemble de microturbines µ_{Tur}. Les microturbines µ_{Tur} sont agencées de sorte à récupérer une énergie cinétique produite par le débit d'eau entrant 22 dans l'ensemble hydraulique 4. Les microturbines 42 convertissent alors l'énergie cinétique en énergie électrique. L'énergie électrique est alors stockée dans au moins une batterie présente dans le dispositif 1. La batterie est alors rechargée à chaque utilisation. Selon un mode de réalisation, la batterie peut être intégrée dans une alimentation générale comportant une batterie de secours qui est chargée périodiquement pour pallier une décharge complète de la batterie chargée par les microturbines 42. Cela peut être le cas lorsqu'un dispositif 1 n'a pas été utilisé pendant une longue période. Selon un mode de réalisation, la batterie et la batterie de secours sont la même batterie.

Selon un mode de réalisation, la batterie est agencée dans une enceinte du dispositif 1. La batterie (non représentée) peut alors distribuer une alimentation à différents composants du dispositif 1 tels que le système de géolocalisation, l'écran, les composants électroniques permettant de traiter les données acquises des différents capteurs : position, consommation, etc.

En outre, la batterie permet d'activer ou non des éléments mécaniques tels que des électrovannes ou des clapets d'ouverture/fermeture.

Selon un mode de réalisation, l'ensemble hydraulique 4 comporte au moins une électrovanne 43 notée EV. L'électrovanne 43 permet de piloter la fermeture et l'ouverture de la distribution d'eau à travers le dispositif 1. Le dispositif 1 se comporte alors comme un dispositif permettant d'activer ou désactiver le service d'accès à la distribution d'eau. L'électrovanne 43 peut être pilotée par un discret ou une commande numérique. On entend par « discret », une connexion électrique dédiée à cette commande de pilotage. Il s'agit par exemple d'une branche électrique physique. Selon un mode de réalisation, l'électrovanne 43 est configurée pour laisser passer un certain volume d'eau. Dans ce dernier mode de réalisation, le débit d'eau délivré 21 peut être associé à un service selon un code réponse reçu par le dispositif 1. Cette solution permet de limiter le débit alloué à un usage donné.

Selon un mode de réalisation, l'ensemble hydraulique 4 comporte une sortie débouchant 5 qui peut être solidaire du bâti 15. À cet effet, une fixation peut être réalisée au moyen d'un connecteur comportant un élément de serrage afin de maintenir un tuyau fixé en sortie du dispositif 1 au niveau de la sortie 5. Éventuellement, une vanne mécanique de sécurité peut être adjointe et fixée au dispositif 1 de l'invention au niveau de la sortie 5.

La figure 3 représente un mode de réalisation du procédé d'activation de l'invention. La figure 4 représente un mode de réalisation du procédé de désactivation de l'invention.

### Procédé d'activation - cas de la bouche incendie

Le procédé de l'invention comporte une première étape d'activation ACT du dispositif 1. Préalablement, un allumage du dispositif peut être réalisé. L'allumage peut être réalisé directement sur une façade du dispositif 1 lorsqu'un bouton d'allumage 9 est présent. Selon une variante de réalisation, l'allumage peut être réalisé à distance par exemple à partir d'une consigne transmise par un lien filaire ou sans fil. À titre d'exemple, l'allumage du dispositif 1 peut être réalisé à l'approche d'un terminal T₁, par exemple un téléphone intelligent, par l'émission d'un signal de réveil Bluetooth permettant d'activer le démarrage du dispositif 1.

L'activation ACT entraine l'acquisition d'un signal GPS afin de déterminer la position du dispositif 1. À cet effet, le dispositif 1 active un récepteur GPS permettant de recevoir un signal GPS. Le récepteur est alors configuré pour recevoir et enregistrer la position reçue d'un système de géolocalisation ou de positionnement. Le récepteur comporte avantageusement une puce d'acquisition d'un signal GPS.

Selon d'autres variantes, le signal est un signal provenant d'un système de géolocalisation autre que le système GPS, tel que le système GALILEO. Selon une autre variante, la position du dispositif 1 est déduite de signaux d'un protocole WIFI, GSM, 3G, 4G, LTE. Dans ce dernier cas, la position peut être déduite d'un procédé de triangulation ou trilatération. Le procédé comporte une étape REC_POS de réception de la position du dispositif 1.

Le dispositif 1 comporte un calculateur afin de déduire des coordonnées de la position reçue du dispositif 1 telles que la latitude LAT et la longitude LON. Le calculateur peut être préconfiguré de sorte à sélectionner une partie seulement des coordonnées selon une précision souhaitée et prédéfinie. À titre d'exemple, pour une précision d'une dizaine de mètres, des coordonnées de 6 chiffres pour la latitude et la longitude suffisent à localiser le dispositif 1. Les 6 chiffres forment dans ce cas un nombre décimal. Selon la précision souhaitée, une troncature des coordonnées peut être réalisée notamment lorsque la position reçue comporte plus d'un nombre donné de chiffres.

La position du dispositif 1 est enregistrée dans une mémoire et/ou directement traitée pour générer un code d'activation CA₁. Le procédé comprend une étape GEN_CA₁ visant à générer un code d'activation CA₁. Un avantage est de générer un code comportant une séquence unique de symboles. Par ailleurs, un autre avantage est d'émettre un code qui soit plus court que les coordonnées GPS réellement reçues par le dispositif 1 afin qu'un utilisateur puisse renvoyer manuellement ce code à une entité distante au moyen d'une interface d'un terminal distinct du dispositif 1.

Selon un exemple, les symboles générés sont des chiffres et des lettres. Selon un autre exemple, le code d'activation CA₁ ne comporte que des chiffres.

Afin de générer le code d'activation CA₁, les N chiffres de la latitude LAT et les P chiffres de la longitude LON peuvent être mis bout à bout sans décimal afin d'obtenir une séquence unique de chiffres.

Dans cet exemple, la latitude LAT = 47.9444 et la longitude LON = 02.4888 et le code d'activation est 479444024888. Il s'agit d'une séquence de 12 chiffres qui sont générés pour être affichés sur un afficheur AFF dans une étape AFF_CA₁ du procédé. Dans ce cas de figure, un avantage est de saisir un code d'activation CA₁ en une seule opération de saisie sur le terminal T₁. L'utilisateur recopie la séquence affichée sur l'écran du dispositif 1.

Selon un autre exemple, le code d'activation CA₁ peut résulter d'une compression numérique afin de réduire le code à afficher afin de simplifier l'opération pour l'utilisateur. Selon un mode de réalisation, la compression est réalisée sans perte, c'est-à-dire que le code d'activation CA₁ généré peut être traité de manière à reconstruire les deux coordonnées GPS acquises.

Selon un mode de réalisation, le nombre prédéfini maximal Nₘₐₓ de nombre codant le code d'activation CA₁ dépend d'une part de la précision souhaitée de la position qui est traitée à partir de la position reçue par l'antenne et d'autre part de la compression que l'on souhaite mettre en oeuvre pour réduire la taille du code d'activation CA₁.

Différentes compressions numériques peuvent être réalisées soient de manière alternative, soit de manière combinée. La génération de nombre(s) intermédiaire(s), la décomposition en nombres premiers ou l'utilisation d'opérateurs algébriques peuvent être mises en oeuvre afin de compresser un nombre donné avec un taux de compression prédéterminé.

Par ailleurs, la compression peut être réalisée en basculant les coordonnées dans un autre système de coordonnées ou en bornant les chiffres des coordonnées selon une connaissance à priori d'une région géographique prédéfinie. À titre d'exemple, pour une mise en oeuvre du procédé de l'invention en France, la partie entière des coordonnées peut être encadrée comme suit :
▪ 42 < LAT < 51,
▪ - 4 < LON < 8.

La latitude peut donc être codée avec un unique chiffre de 0 à 9 et la longitude LON peut être codée avec 2 chiffres de 0 à 12. Il est donc possible de réduire la taille du code d'activation en considérant des espaces dans lesquels les coordonnées peuvent être encodées avec un minimum de chiffres.

Le procédé de l'invention permet donc de générer un nombre limité de chiffres correspondant à des coordonnées d'une position reçue pour une précision donnée. Le procédé permet de coder et de compresser ces coordonnées en une séquence limitée de symboles pour être affichée sur un afficheur du dispositif 1.

Selon un exemple de réalisation, l'afficheur 2 est intégré en façade du dispositif 1 de sorte à être directement visible par un utilisateur qui aurait préalablement activé le dispositif 1. L'afficheur 2 peut être, par exemple, un écran numérique de technologie de type OLED, LED, LCD ou plasma.

Le code d'activation CA₁ est donc affiché sur l'afficheur 2. Le code d'activation CA₁ peut être affiché jusqu'à la réception d'un signal ou l'actionnement d'une commande sur ledit dispositif 1. Selon un autre exemple, le code d'activation CA₁ est affiché pendant une durée prédéfinie afin de limiter la consommation d'énergie du dispositif 1.

Le procédé comporte une étape d'acquisition ACQ_CA₁ du code d'activation CA₁ par un terminal mobile T₁. Un utilisateur du dispositif 1 est alors en mesure de saisir le code d'activation CA₁ généré à partir d'un clavier d'un terminal T₁. Le terminal T₁ peut être un téléphone intelligent, une tablette ou tout autre appareil électronique permettant de transmettre des signaux vers une antenne distante. Selon un mode de réalisation, le terminal est un terminal tactile. Le terminal T₁ comprend un logiciel permettant de générer une interface de saisie. L'interface de saisie peut alors comprendre différents champs d'informations tels qu'un identifiant utilisateur, un identifiant du terminal T₁, un identifiant du dispositif 1, une URL d'un site internet à partir duquel un utilisateur peut s'authentifier et procéder à l'activation ou à la désactivation, l'heure, le niveau de batterie, etc. L'interface de saisie permet de saisir, par exemple à partir d'un clavier numérique, la séquence de chiffres du code d'activation.

Selon un autre mode de réalisation, une partie des informations est obtenue par le terminal T₁ au moyen d'une lecture d'un code inscrit sur le dispositif 1. Le code peut être par exemple un code barre ou un code de type QR code ou flash code. Dans ce cas, l'utilisateur scanne le code apparent sur le dispositif 1, par exemple, à partir d'une optique du terminal T₁, tel que l'objectif de l'appareil photo ou de la caméra. Le code est ensuite décodé par des moyens de calculs du terminal T₁ et les données sont enregistrées dans une mémoire du terminal T₁. Les données peuvent ensuite être traitées pour être possiblement transmises vers l'entité distante. Le code scanné peut aussi être automatiquement intégré dans l'interface de saisie lorsque l'interface propose l'acquisition du code au moment de la saisie d'information.

Selon un autre mode de réalisation, le code d'activation est transmis automatiquement au terminal par une interface sans fil par exemple de type Bluetooth.

Le procédé comporte une étape de transmission TRANS_CA₁ du code d'activation CA₁ vers une entité distante SERV₁. Lorsque le code d'activation CA₁ est saisi, une commande permettant d'activer son transfert vers une entité distante SERV₁ est engagée par l'utilisateur. Selon un mode de réalisation, un message de confirmation ou une seconde validation peut être mis en oeuvre par le procédé de l'invention afin de diminuer les erreurs commises.

L'émission du code d'activation CA₁ peut, par exemple, être réalisée par un codage des données et une modulation d'un signal radio vers une balise GSM, 3G, 4G.

Selon un mode de réalisation, le terminal T₁ émet un ensemble de données à l'entité distante SERV₁ telles que :
- un identifiant utilisateur et/ou ;
- un identifiant du terminal T₁ et/ou ;
- des données du profil utilisateur et/ou ;
- un identifiant du dispositif 1 et/ou ;
- un identifiant de l'objet tel que la bouche d'incendie 10 et/ou ;
- une donnée relative à une consommation précédente stockée sur le terminal T₁ et/ou ;
- etc.

L'identifiant de la bouche d'incendie 10 peut être, par exemple, sélectionné à partir d'une liste de bouches d'incendie extraite d'une base de données d'un serveur distant, qui peut le même serveur que SERV₁ ou un autre serveur. Selon un exemple de réalisation, l'utilisateur peut définir une adresse dans une interface de saisie du terminal T₁ afin de présélectionner un ensemble de bouches d'incendie susceptible de correspondre avec l'adresse indiquée. La sélection de la bouche d'incendie à laquelle le dispositif 1 est raccordé peut alors être réalisée à partir d'une liste restreinte de choix.

Le procédé de l'invention comporte une étape de réception REC_CA₁ du code d'activation CA₁ par une entité distante SERV₁. L'entité distante SERV₁ est, par exemple, un serveur qui comporte des moyens de calculs et au moins une mémoire pour stocker des données. L'entité distante comporte une interface de communication pour être accessible depuis un réseau de données tel que le réseau internet. Dans ce contexte, le terminal T₁ et le serveur SERV₁ peuvent communiquer ensemble au moyen d'une liaison de données bidirectionnelle.

Le procédé comporte une étape décodage du code d'activation CA₁ reçu par l'entité distante SERV₁. Grâce au codage sans perte, le serveur SERV₁ est configuré pour décoder le code d'activation CA₁ et déterminer les coordonnées de la position du dispositif 1. Le serveur SERV₁ comporte une mémoire ou une interface avec une mémoire distante comprenant un ensemble de positions de bouches d'incendie 10. Une comparaison de la position décodée à partir du code d'activation CA₁ avec la position la plus proche des positions enregistrées des bouches d'incendie 10 permet de déterminer à quelle bouche d'incendie 10 l'utilisateur tente de se connecter pour prélever un volume d'eau. Le serveur SERV₁ comporte donc une étape de vérification que le code d'activation CA₁ reçu correspond à une position d'une bouche incendie qu'il connait. Selon un autre mode de réalisation, le serveur SERV₁ vérifie que le code d'activation CA₁ reçu correspond à une position d'une bouche incendie 10 qui est référencée dans une base de données accessible audit serveur SERV₁ . En outre, selon un mode de réalisation, il vérifie que cette bouche d'incendie est bien la bouche d'incendie 10 renseignée, le cas échéant, par l'utilisateur au moyen du terminal T₁.

Du fait de la transmission de ses coordonnées géographiques, le dispositif 1 de l'invention offre aussi la possibilité de lui interdire, à distance au moyen du serveur SERV₁, le puisage d'eau sur une bouche incendie 10 à laquelle le raccordement ne serait pas autorisé.

Selon un mode de réalisation, le serveur reçoit préalablement des demandes d'utilisation de dispositif 1 et/ou un planning d'accès à des bouches d'incendie 10. Dans ce cas de figure, le serveur SERV₁ est en mesure de réaliser une comparaison entre les demandes d'activation reçues avec les demandes d'accès préalablement configurées.

Le procédé comporte une étape de génération GEN_CR₁ d'un code réponse CR₁ lorsque des conditions sont réunies. Le code réponse CR₁ est également noté premier code réponse CR₁ afin de distinguer sa notation avec un code réponse émis lors de la désactivation qui correspond à un second code réponse CR₂. Selon un mode de réalisation, l'entité distante SERV₁ décode par exemple un identifiant utilisateur. À cette fin, le serveur SERV₁ peut accéder à une base de données d'utilisateurs référencés. Si le code d'activation CA₁ est vérifié et que l'identifiant utilisateur correspond à un identifiant connu du système de gestion de données, le serveur SERV₁ génère un code réponse CR₁. Le code réponse CR₁ est, par exemple, un code préenregistré et associé à la bouche incendie 10, ou un code généré à partir du code d'activation CA₁. Dans ce dernier cas, le code d'activation CA₁ peut être obtenu à partir d'une authentification de type « challenge-réponse », connue de l'homme de l'art, dont la réponse est générée en fonction du challenge.

Le procédé comporte une étape TRANS_CR₁ de transmission du code réponse CR₁ au terminal T₁. Le code réponse CR₁ est alors émis automatiquement après vérification du serveur SERV₁ vers le terminal T₁ à partir du réseau de données NET. Le procédé comporte une étape REC_CR₁ de réception du code réponse CR₁ par le terminal T₁. Le code réponse CR₁ est alors affiché par une interface du terminal T₁. Lors des transmissions des données entre le serveur SERV₁ et le terminal T₁, l'invention peut être mise en oeuvre avec différents protocoles de transmission de données et différentes techniques d'encodage de données.

Le procédé comporte une étape d'acquisition ACQ_CR₁ du code CR₁ par le dispositif 1. Lorsqu'un utilisateur accède au code réponse CR₁ à partir de son terminal T₁, il est alors en mesure de saisir ce dernier code réponse CR₁ grâce à une interface utilisateur du dispositif 1. L'interface utilisateur comporte par exemple un clavier 3 permettant de saisir une séquence de symboles, tels que des chiffres. L'écran 2 affiche le code saisi de manière à ce que l'utilisateur puisse vérifier pendant sa saisie qu'il ne commet pas une erreur. Lorsque le code réponse CR₁ est saisi, l'utilisateur valide l'action par une action sur un bouton ou un actionneur. Dans ce cas, le code saisi est enregistré.

Le procédé comporte une étape de vérification VERIF_CR₁ du code saisi. Selon un exemple, le dispositif 1 décode et vérifie le code réponse CR₁ saisi avec un code qui est associé au dispositif 1 et/ou obtenu à partir du code d'activation CA₁ et enregistré dans une mémoire du dispositif 1. Lorsque le code saisi est vérifié, le dispositif 1 est en mesure de déverrouiller une électrovanne 43 et/ou d'activer le compteur d'eau 41.

Le procédé de l'invention permet donc de sécuriser l'accès à une bouche d'incendie 10 par un contrôle d'un identifiant utilisateur et le contrôle de la position de ce dernier. Si l'utilisateur n'est pas dans un lieu correctement identifié ou s'il dispose d'un dispositif 1 qui n'est pas le dispositif alloué à ce dernier lieu, le service d'accès à l'eau peut être contrôlé et maitrisé à distance par l'intermédiaire du dispositif 1. En effet, le dispositif 1 est en mesure d'autoriser ou non l'accès à l'eau en fonction de la réception ou non d'un code et de sa valeur lorsqu'il est reçu.

Enfin, un contrôle par l'intermédiaire du dispositif 1 de la consommation en eau et l'affectation de cette consommation à un utilisateur donné peuvent être automatiquement gérés par une entité distante.

### Procédé de désactivation - cas de la bouche incendie

L'invention concerne également un procédé de désactivation à un service donné, tel que l'accès à une bouche incendie 10. La figure 4 représente un mode de réalisation de mise en oeuvre des étapes du procédé de désactivation de l'invention.

Selon un exemple, la désactivation DESACT est engagée par une action sur le dispositif 1. Lorsque la désactivation est engagée, une demande de confirmation peut, par exemple, être mise en place pour prévenir de toute action malencontreuse de l'utilisateur ne souhaitant pas désactiver le service. La désactivation peut être générée à partir d'une commande tactile ou par une action sur un actionneur tel que le bouton d'activation et de désactivation 9'.

Lors de la détection d'une désactivation, le dispositif 1 affiche la consommation d'eau CONS₁. Selon un mode de réalisation, il s'agit de la consommation d'eau depuis la dernière activation sur l'afficheur 2. Selon un autre mode d'activation, il s'agit de la consommation d'eau depuis la mise en service du dispositif 1 ou de sa réinitialisation. Ainsi, après une utilisation du dispositif 1, une consommation exprimée en litres est transmise d'une mémoire du compteur d'eau vers l'écran 2. La consommation CONS₁ est alors affichée, cette étape est notée AFF_CONS₁ sur la figure 4. De manière complémentaire ou alternative, un code de désactivation ou un code de consommation CODE_CONS₁ est affiché sur l'afficheur 2, cette étape est notée AFF_CODE_CONS₁. Le code de consommation CODE_CONS₁ est généré à partir de la consommation CONS₁ de sorte à encoder ladite consommation CONS₁ et à la transmettre à l'entité distante SERV₁. Selon un exemple, le code de consommation CODE_CONS₁ peut être généré à partir d'un secret partagé entre l'entité distante SERV₁ et le dispositif 1. Selon une autre variante, le code de consommation CODE_CONS₁ est généré à partir de la consommation CONS₁ et de la position du dispositif 1. Selon une autre variante, le code de consommation CODE_CONS₁ est identique a ladite consommation CONS₁

La consommation CONS₁ ou le code de consommation CODE_CONS₁, qu'on notera par la suite consommation CONS₁, est acquis par le terminal T₁. L'étape d'acquisition est notée ACQ_CONS₁. Selon un exemple de réalisation, l'utilisateur saisit au moyen de l'interface du terminal T₁ le code de consommation CONS₁. Le terminal T₁ enregistre la consommation CONS₁ dans une mémoire et transmet cette dernière consommation vers l'entité distante SERV₁ par l'intermédiaire du réseau de données NET. L'étape de transmission est notée TRANS_CONS₁ sur la figure 4.

Le procédé de désactivation comporte alors une étape de réception REC_CONS₁ de la consommation CONS₁ par le serveur SERV₁. Selon un exemple, il s'agit du même serveur que le serveur du procédé d'activation. Selon un autre exemple, le serveur SERV₁ peut être un autre serveur de données connecté au réseau de données NET.

La consommation CONS₁ est alors enregistrée dans une mémoire du serveur SERV₁. La consommation CONS₁ peut alors être exploitée, par exemple, pour être affectée à un identifiant utilisateur notamment pour générer une facturation ou un suivi relatif à la consommation d'eau de l'utilisateur en question.

Afin de désactiver correctement le dispositif 1 de l'invention, le procédé de l'invention comporte, selon un mode de réalisation, une étape de génération GEN_CR₂ d'un code réponse CR₂ réalisée par le serveur SERV₁ afin d'acquitter la procédure de désactivation du serveur vers le dispositif 1.

Lors de l'engagement de la désactivation sur le dispositif 1, par exemple par l'intermédiaire du bouton 9', le relevé du compteur d'eau est désactivé. Selon un monde de réalisation, lors de l'engagement de la désactivation sur le dispositif 1 le verrouillage de l'électrovanne EV est activé. Selon un autre mode de réalisation, ces actions sont réalisées lors la coupure de l'électrovanne réalisée directement sur le dispositif 1.

La réception d'un code réponse CR₂ par le dispositif 1 confirme cette désactivation au niveau du dispositif 1. Le code réponse CR₂ est émis par le serveur SERV₁ vers le terminal. Ce dernier code réponse CR₂ peut être joint à d'autres données, telles qu'une donnée d'horodatage ou une donnée relative à l'identifiant utilisateur.

Le procédé comporte une étape de réception REC_CR₂ d'un second code réponse CR₂ par le terminal T₁. Le second code réponse CR₂ est enregistré et affiché sur l'afficheur du terminal T₁. L'utilisateur peut alors consulter le second code réponse CR₂ reçu. Selon un exemple, le second code réponse CR₂ comprend entre 4 et 6 chiffres. Selon un autre mode de réalisation, il comporte une séquence plus courte ou plus longue. Il peut en outre comprendre d'autres symboles que des chiffres.

Selon un exemple, le code réponse CR₂ est automatiquement généré à partir des données du code de désactivation CODE_CONS₁.

Le procédé comporte une étape d'acquisition ACQ_CR₂ du code réponse CR₂ par l'intermédiaire par exemple de son interface. L'utilisateur peut par exemple saisir le code réponse CR₂ au moyen du clavier. Il peut en outre contrôler la saisie à partir de l'écran qui affiche les chiffres saisis.

Le dispositif 1 comporte alors une étape de vérification VERIF_CR₂ du code réponse CR₂ et un engagement de la désactivation ou une confirmation de la désactivation. Selon un mode de réalisation, la désactivation effective du dispositif 1 entraine la fermeture de l'électrovanne 43 de sorte à couper l'accès à l'eau.

Selon un mode de réalisation, l'ensemble des actions effectuées par des éléments du dispositif 1 sont référencées dans un journal de log. Les actions correspondent à des évènements logiciels qui peuvent, par exemple, être datés. En outre, diverses données peuvent être associées à chaque évènement du journal des logs. Parmi ces données, la position du dispositif 1 peut être enregistrée lorsque l'évènement s'est produit ou encore l'identifiant d'activation permettant de déterminer à quelle activation se réfère l'évènement enregistré. Un identifiant d'activation peut correspondre à un numéro attribué, les numéros étant par exemple attribués séquentiellement selon un ordre croissant.

De cette manière, au cours d'un cycle d'activation et de désactivation du dispositif 1, l'entité distante SERV₁ qui peut être localisée dans un centre de contrôle est en mesure de déterminer :
▪ l'emplacement du dispositif 1 lorsqu'il a été utilisé ; et,
▪ la quantité d'eau consommée à partir du dispositif 1.

Les procédés d'activation et de désactivation se faisant au moyen d'un terminal T₁ externe au dispositif 1, l'impact énergétique des étapes réalisées par le terminal T₁ sur la consommation énergétique du dispositif 1 est limité.

### Système d'accès à un service

Selon un autre aspect, l'invention concerne un système, tel que représenté à la figure 5, comportant un dispositif 1, un terminal T₁ et une entité distante SERV₁. L'entité distante SERV₁ permet de recevoir un code d'activation CA₁ et d'émettre un code réponse CR₁ ou encore de recevoir. En outre, l'entité distante SERV₁ permet de recevoir une consommation CONS₁ ou un code de consommation CODE_CONS₁ et d'émettre un second code réponse CR₂.

Le dispositif 1 est raccordé physiquement à une bouche incendie 10 par des moyens permettant de solidariser les deux éléments. Le dispositif 1 comporte un récepteur GPS pour recevoir une position d'une pluralité de satellites SAT ou une interface d'une liaison sans fil pour recevoir un signal de positionnement. Selon un mode de réalisation, il n'existe aucun lien physique ou sans fil entre le dispositif 1 et la bouche incendie 10. Le terminal T₁ est connecté à un réseau de données et comporte des composants électroniques et logiciels pour mettre en oeuvre une interface de gestion d'une activation d'une bouche incendie 10. Le serveur SERV₁ est également raccordé au réseau de données. Selon un mode de réalisation, un serveur supplémentaire de gestion des droits d'accès est mis en oeuvre pour autoriser un utilisateur donné à échanger des données avec le serveur SERV₁.

Selon un exemple d'usage du système, le dispositif 1 peut être utilisé par une municipalité, une ville ou tout opérateur exploitant un réseau de distribution d'eau dans le cadre d'évènements nécessitant un accès temporaire à ce réseau. Selon différentes mises en oeuvre, le dispositif 1 peut permettre des raccordements de chantiers ou d'autres raccordements forains. Durant un chantier de travaux, le dispositif peut être raccordé à une bouche d'incendie afin de permettre l'alimentation en eau du chantier. Au moment de l'activation du dispositif 1, un centre de contrôle vérifie que celui-ci est connecté à la bouche d'incendie mise à disposition de ce chantier, confirmant ainsi que le dispositif 1 n'a pas été raccordé, intentionnellement ou par erreur, sur un accès à l'eau qui ne lui était pas réservée.

Une fois les travaux terminés, le dispositif 1 peut être désactivé. À cette occasion, l'exploitant du réseau peut être informé de la consommation d'eau mesurée par le dispositif 1. L'exploitant saura, dès lors, qu'il peut affecter à un autre utilisateur la bouche d'incendie initialement affectée audit chantier.

Le dispositif 1 peut être utilisé de sorte que l'activation ou la désactivation déclenchent soit l'ouverture d'une ou plusieurs électrovannes permettant le puisage d'eau soit déclenchent la fermeture de cette(ces) électrovanne(s), empêchant le puisage d'eau.

Le dispositif 1 de l'invention peut aussi être utilisé sans que l'activation et la désactivation n'actionnent une électrovanne. Il permet alors le suivi et le contrôle, a posteriori, des consommations et des positions géographiques relatives à chaque usage du dispositif 1.

Selon un mode de réalisation, un scan d'un QR code présent sur le dispositif 1 peut être réalisée à partir du terminer T₁. La lecture du QR code peut par exemple permettre de charger une page WEB d'un serveur distant auquel l'utilisateur peut s'authentifier. Selon un exemple, l'identifiant du dispositif 1 est alors généré dans un champ de saisi de l'interface WEB à laquelle le terminal T₁ s'est connecté.

Selon un exemple, l'utilisateur saisit son identifiant et son mot de passe dans l'interface. L'utilisateur peut alors, par exemple, sélectionner une Borne d'incendie 10 parmi une liste proposée. La liste proposée peut être extraite en fonction d'une base de données distante comportant un ensemble de bornes d'incendie 10. Selon un exemple, un sous ensemble de bornes d'incendie 10 est sélectionné en fonction d'une zone géographie définie par l'utilisateur ou en fonction de droits dont il dispose. Selon un mode de réalisation, un contrôle de l'identifiant utilisateur est réalisé préalablement pour vérifier les droits dont il dispose, notamment pour sélectionner un sous ensemble de bornes d'incendie 10 auquel il a accès. Selon un exemple de réalisation, le contrôle n'est pas directement réalisé avec l'identifiant utilisateur mais avec un numéro de contrat qui est associé avec l'identifiant utilisateur.

Selon un exemple, l'utilisateur sélectionne l'identifiant du dispositif 1 qu'il souhaite activer parmi une liste, par exemple lorsque plusieurs dispositifs 1 ont été mis à sa disposition. Dans cette variante de réalisation d'une séquence d'activation, l''utilisateur saisit alors à l'issue de ces précédentes étapes préliminaires le code d'activation dans une interface du terminal pour la transmettre à une entité distante.

Dans cette dernière variante, l'entité distante SERV₁ compare la position comprise dans le code d'activation CA₁ en décodant ledit code avec la position de la borne d'incendie 10 sélectionnée préalablement par l'utilisateur. Lorsque les positions sont identiques, à une marge d'erreur près, le code réponse CR₁ est retourné par le serveur SERV₁.

Eventuellement, en cours d'utilisation du dispositif 1, à intervalles réguliers ou après une période de non puisage d'eau prolongée, le dispositif 1 procède à une nouvelle acquisition de sa position et vérifie qu'elle n'a pas changé significativement. Si elle a changé, selon un mode de réalisation, le dispositif 1 bloque l'électrovanne EV.

Selon un mode de réalisation, une ou plusieurs acquisitions de coordonnées, par exemple GPS, peuvent être envisagées afin de fiabiliser la position calculée du dispositif 1. Selon un exemple de réalisation, quatre acquisitions de positions sont réalisées successivement, le calculateur est alors configuré pour supprimer deux positions extrémales de l'échantillon et conserver les deux positions non extrêmales. Une moyenne des positions conservées est alors réalisée afin de sécuriser le calcul de la position.

Selon un exemple de réalisation, le terminal T₁ est intégré dans le dispositif 1. Il correspond dans ce cas à un composant du dispositif 1. Dans ce cas de figure, l'identifiant et la position POS₁ du dispositif 1 peuvent être automatiquement envoyés à l'entité distante SERV₁.

Dans cette configuration, le serveur distant SERV₁ vérifie que sur la liste des bouches d'incendies 10, il s'en trouve au moins une à proximité de la position POS₁. Si c'est le cas, il autorise le déverrouillage du dispositif 1.

Le dispositif 1 reçoit une autorisation du serveur distant par un code réponse et ouvre l'électrovanne EV.

Eventuellement, à intervalles réguliers, ou aléatoires ou après une absence de consommation dépassant une durée prédéfinie, le dispositif 1 de l'invention peut procéder à une vérification identique, par exemple de la position du dispositif 1.

Si la nouvelle position POSi est significativement différente de POS₁, il peut désactiver l'électrovanne EV ou se tourner vers l'entité distante SERV₁ pour une nouvelle requête d'autorisation.

A chaque connexion au serveur distant SERVi, le dispositif 1 peut communiquer le nombre de litres écoules, c'est-à-dire une donnée relative à la consommation mesurée.

Lors de la désactivation, le dispositif 1 ferme l'électrovanne EV et et communique éventuellement sa position. Il communique également avantageusement la consommation.

### Procédé d'activation - Cas du vélo

Selon un autre mode de réalisation, le dispositif 1 de l'invention est un dispositif 1 fixé à un vélo. Les vélos sont des vélos en libre-service pouvant être loués ou réservés à partir d'une application mobile installée sur un téléphone intelligent ou une tablette ou via un portail web accessible notamment depuis un téléphone intelligent ou une tablette. La figure 6 représente le système de l'invention lorsqu'un tel dispositif 1 est fixé à un vélo 11. Lorsqu'un parc de vélos comporte plusieurs dizaines, centaines ou milliers de vélos, chacun d'entre eux est muni d'un dispositif 1 de l'invention. Le dispositif 1 est possiblement lié fonctionnement à un verrou activable selon l'activation ou la désactivation du dispositif 1. Selon un mode de réalisation, le dispositif 1 comporte une interface mécanique permettant d'activer un verrou. Selon un autre exemple, le dispositif 1 active à distance le verrou par l'intermédiaire d'un composant électronique, d'une interface sans fil et d'une consigne numérique transmise.

Le dispositif 1 peut être agencé au niveau du guidon, de la selle ou au plus proche de la roue d'un vélo.

Un utilisateur souhaite activer le service, autrement dit utiliser le vélo qui est verrouillé. Pour cela, il génère une action sur le dispositif 1, par exemple en pressant un actionneur du dispositif. Lorsque l'activation est engagée, le récepteur GPS ou récepteur de position de manière plus générale acquiert la position. Selon un autre mode de réalisation, la dernière position du vélo acquise est utilisée. Selon un autre mode de réalisation, lors de la réception de la position du dispositif 1, la position acquise est comparée avec la dernière position reçue et mémorisée.

Le dispositif 1 comporte un calculateur permettant de générer un code d'activation CA₁ comme cela a été détaillé précédemment pour le cas de la bouche d'incendie 10. Le dispositif 1 comporte un écran permettant d'afficher le code d'activation CA₁. Le code d'activation CA₁ est alors transmis à une entité distante SERV₁ au moyen d'un terminal T₁. Selon un mode de réalisation, un code barre ou un QR code fixe sur le vélo peut faciliter la saisie d'une partie des paramètres, par exemple, l'identifiant du vélo qui sera ensuite transmis à l'entité distante SERV₁. Selon un exemple de réalisation, l'utilisateur saisit le code d'activation sur une interface du terminal T₁ pour le transmettre à une entité distante. Selon un autre mode de réalisation, le code d'activation CA₁ peut être automatiquement transmis grâce à une interface sans fil du dispositif 1 communicante avec le terminal T₁. L'interface sans fil peut être mise en oeuvre avec un protocole tel que le Bluetooth. Le code d'activation CA₁ est alors reçu automatiquement par le terminal T₁ pour être retransmis au serveur SERV₁. Toutefois, une telle liaison n'est pas forcément souhaitée lorsque l'on souhaite limiter les accès au dispositif 1 afin d'éviter un piratage par exemple ou lorsque la consommation du dispositif 1 est critique et qu'une limitation des services nécessitant un courant électrique est recherchée.

De manière identique, le serveur SERV₁ émet un code réponse CR₁ lorsque le code d'activation vérifie au moins une condition, telle que la localité présumée du vélo 11. Le serveur SERV₁ peut également contrôler l'identité de l'utilisateur du service. Cette identité peut être contrôlée en comparant l'identifiant utilisateur transmis avec le code d'activation CA₁ par le terminal T₁ avec une base de données d'utilisateurs. Un code réponse CR₁ est généré par le serveur SERV₁ afin que ce dernier soit transmis au terminal T₁ puis acquis par le dispositif 1. Le dispositif 1 déverrouille alors automatiquement le verrou permettant de libérer le vélo de toute contrainte de roulage. L'utilisateur peut alors utiliser le vélo 11. Afin de mettre en oeuvre ce déverrouillage, le dispositif 1 comporte un calculateur permettant de décoder, par exemple, un code réponse reçu CR₁. Le décodage peut se faire en fonction d'un secret partagé avec le serveur et/ou se baser sur le code d'activation CA₁.

### Procédé de désactivation - Cas du vélo

Lorsque l'utilisateur souhaite laisser à nouveau le vélo après son utilisation, par exemple sur le trottoir, il désactive le service de sorte que le dispositif 1 verrouille à nouveau le verrou ou le cadenas du vélo. À cette fin, une action sur le dispositif 1 permet de générer un code de désactivation, il peut s'agir d'un code généré, d'une distance parcourue, ou de toute autre donnée générée par le dispositif 1 de l'invention. Le code comporte une suite de chiffres. Le code de désactivation ainsi généré peut l'être avec une clef ou un secret partagé avec le serveur distant SERV₁ de sorte que le serveur SERV₁ puisse vérifier automatiquement la validité du code généré par le dispositif 1. Le code généré peut comprendre des données relatives à la nouvelle position du dispositif. Ainsi la position peut être transmise au serveur.

Lorsque le serveur SERV₁ reçoit par l'intermédiaire du terminal T₁ un code de désactivation, il génère un second code réponse CR₂ vers le terminal T₁ au travers du réseau de données NET. Le second code CR₂ est alors acquis par le dispositif 1 de sorte qu'il active le verrou du vélo.

L'invention peut alors être mise en oeuvre en couplant le dispositif 1 avec une dynamo afin de récupérer une partie de l'énergie cinétique du vélo pour recharger une batterie lors de l'utilisation du vélo.

Dans le mode de réalisation de la bouche d'incendie ou du vélo, la position du dispositif 1 peut être corroborée avec la position présumée connue du terminal T₁. Cette action peut être réalisée soit par le terminal à réception du code d'activation CA₁, soit par le serveur SERV₁ recevant le code d'activation du terminal T₁. La position du terminal T₁ peut être acquise au moyen de bornes GSM, LTE ou d'autres bornes assurant un service de téléphonie mobile. Selon d'autres modes de réalisation, la position peut être déduite de l'accès à un réseau WIFI. Selon un autre exemple, la position est acquise par la géolocalisation par exemple d'un système GPS.

Dans le mode de réalisation correspondant à un usage du dispositif 1 avec un vélo, le dispositif 1 est fixé pour toute utilisation à un vélo. Le dispositif 1 est alors solidarisé avec un unique vélo. Dans le mode de réalisation correspondant à un usage du dispositif 1 avec une bouche d'incendie 10, le dispositif 1 est destiné à être utilisé avec différentes bouches incendie. Le dispositif 1 est alors préalablement fixé pour être solidarisé avec une bouche d'incendie. La position décodée comprise dans le code d'activation permet alors de déterminer quelle est la bouche d'incendie qui est raccordée par un dispositif. C'est l'identifiant utilisateur qui peut être utilisé pour connaitre quel dispositif 1 est utilisé, ou selon un autre mode de réalisation, chaque dispositif 1 peut être identifiable au moyen d'un code saisi par l'utilisateur manuellement ou au moyen d'un code barre ou d'un QR code et transféré à SERV₁.

Un avantage de l'invention est de mettre à disposition un dispositif 1 qui est uniquement raccordé physiquement à l'objet dont il contrôle l'accès au service, la bouche d'incendie ou au vélo selon les utilisations.

En outre, le dispositif 1 n'est ni raccordé au réseau électrique ni connecté à un réseau de transmission de données hormis pour l'acquisition de coordonnées géographiques.

Un autre avantage est que les procédés d'activation et de désactivation de l'invention du dispositif 1 permettent de sécuriser son fonctionnement. En effet, le dispositif 1 ne se met en service que si l'utilisateur a réussi une série de questions/ réponses qui valident qu'un tel dispositif est manipulé par une personne en théorie compétente pour l'utiliser. Cet échange est conçu pour sécuriser notamment le puisage d'eau et pour faciliter le suivi de l'usage du dispositif 1, le comptage et la facturation par transmission à distance de la consommation. Le procédé d'activation et le procédé de désactivation permettent également de réduire les consommations électriques du dispositif 1.

## Revendications

1. Procédé d'activation d'un service associé à un objet (10, 11) comprenant :
▪ Acquisition (REC_POS) d'une position (POS₁) au moyen d'un système de géolocalisation d'un dispositif (1) rendu solidaire dudit objet (10, 11) ;
▪ Calcul d'un code d'activation (GEN_CA₁) à partir de la position acquise (POS₁), le code d'activation (CA₁) encodant par une compression numérique la position géographique acquise de manière à réduire le nombre de symboles de ladite position acquise;
▪ Affichage du code d'activation (AFF_CA) au moyen d'un afficheur (2) du dispositif (1) ;
▪ Transmission du code d'activation (CA₁) au moyen d'un terminal mobile électronique (T₁) comportant une interface sans fil vers une entité distante (SERV₁) à partir d'un réseau de données;
▪ Réception d'un code réponse (CR₁) par le terminal mobile électronique (T₁), ledit code réponse (CR₁) étant généré par l'entité distante (SERV₁) ;
▪ Acquisition dudit code de réponse (CR₁) par le dispositif (1) ;
▪ Décodage du code de réponse (CR₁) par un calculateur et une mémoire du dispositif (1) ;
▪ Génération d'une commande de déverrouillage d'un service associé à l'objet solidaire (10, 11) dudit dispositif (1).

2. Procédé selon la revendication 1, **caractérisé en ce que** le procédé comporte une étape de troncature de la position acquise (POS₁) afin de traiter une seconde position (POS₂) résultante d'une approximation de la position (POS₁) selon une précision de positionnement prédéfinie.

3. Procédé selon l'une quelconque des revendications 1 à 2, **caractérisé en ce que** le calcul d'un code d'activation (CA₁) génère une unique séquence de chiffres, ledit code d'activation (CA₁) étant compressé par un codage sans perte.

4. Procédé selon l'une quelconque des revendications 1 à 3, **caractérisé en ce qu'**il comprend une transmission d'un identifiant utilisateur (ID₁) au moyen d'un terminal mobile électronique (T₁) comportant une interface sans fil pour établir une liaison de données avec une entité distante (SERV₁) au travers d'un réseau de données (NET).

5. Procédé selon l'une quelconque des revendications 1 à 4, **caractérisé en ce qu'**il comprend les étapes suivantes réalisées par l'entité distante (SERV₁) :
▪ Décodage du code d'activation (CA₁) par un calculateur et une mémoire de l'entité distante (1) ;
▪ Comparaison de la position décodée avec un ensemble de positions sauvegardées dans une mémoire, chacune étant associée à un identifiant d'objet (10, 11) ;
▪ Sélection d'un identifiant d'objet associé à une position située à une distance de la position décodée inférieure à un seuil prédéfini et/ou vérification que l'identifiant d'objet sélectionné au moyen d'une interface du terminal (T₁) est associé à une position située à une distance de la position décodée inférieure à un seuil prédéfini ;
▪ Génération d'un code de réponse (CR₁) à partir de l'identifiant de l'objet et/ou à partir du code d'activation (CA₁).

6. Procédé selon l'une quelconque des revendications précédentes, **caractérisé en ce qu'**il comprend :
▪ Fixation d'un dispositif (1) audit objet (10, 11).

7. Procédé selon l'une quelconque des revendications précédentes, **caractérisé en ce qu'**il comprend une pluralité d'acquisitions de positions à intervalles réguliers au cours d'une période pendant laquelle l'activation du service est réalisée.

8. Procédé selon l'une quelconque des revendications précédentes, **caractérisé en ce que** :
▪ le code d'activation (CA₁) comporte un nombre de symboles égal à 7, et/ou ;
▪ l'acquisition d'au moins un code réponse par le dispositif (1) est réalisé au moyen d'une interface de saisie du dispositif (1).

9. Procédé selon l'une quelconque des revendications 1 à 8, **caractérisé en ce que** :
- l'objet (10) est une bouche d'incendie ;
- le dispositif (1) comprend une vanne d'accès, un écran (2) et une interface de saisie (3)
- la commande de déverrouillage active :
∘ le relevé d'un compteur d'eau pour mesurer un débit délivré, et/ou;
∘ une première électrovanne pour engager son ouverture ou sa fermeture.
- au moins une microturbine (43) est agencée pour récupérer une partie de l'énergie issue de l'écoulement d'un débit d'eau (22) de la bouche d'incendie (10).

10. Procédé selon l'une quelconque des revendications 1 à 9, **caractérisé en ce que** l'objet (11) est un vélo et que le dispositif (1) comprend un verrou solidaire du vélo, un écran (2) et une interface de saisie (3).

11. Procédé selon l'une des revendication 1 à 10, **caractérisé en ce qu'**il comprend:
▪ Engagement d'une action permettant de générer un code de désactivation (CODE_CONS₁) ;
▪ Affichage du code de désactivation (CODE_CONS₁) au moyen d'un afficheur du dispositif (1) ;
▪ Transmission d'un code de désactivation comportant un volume d'eau consommé (CONS₁) au moyen d'un terminal mobile électronique (T₁), ledit terminal (T₁) comportant une interface sans fil pour être connecté à un réseau de données (NET) ;
▪ Réception d'un second code réponse (CR₂) par le terminal mobile électronique (T₁), ledit second code réponse (CR₁) étant généré par l'entité distante (SERV₁) ;
▪ Acquisition dudit second code de réponse (CR₂) ;
▪ Décodage du code de réponse (CR₂) par un calculateur et une mémoire du dispositif (1) ;
▪ Génération d'une commande de verrouillage d'un service associé à l'objet solidaire (10, 11) dudit dispositif (1),
▪ Désactivation du service associé à l'objet (10, 11).

12. Dispositif d'accès (1) à une bouche d'incendie (10) comportant :
▪ Une fixation pour rendre solidaire ledit dispositif (1) d'accès avec ladite bouche d'incendie (10) ;
▪ Un ensemble hydraulique (4) pour acheminer un volume d'eau prélevé vers une sortie (5) du dispositif (1) ;
▪ Un compteur d'eau (41) permettant de mesurer la consommation en eau ;
▪ Une interface pour acquérir un signal délivrant une position dudit dispositif (1), ledit signal étant émis à partir d'un système de localisation ou de géolocalisation ;
▪ Un calculateur pour générer un code d'activation (CA₁) encodé à partir de la position du dispositif (1), ledit code d'activation encodant par une compression numérique la position géographique acquise de manière à réduire le nombre de symboles de ladite position acquise;
▪ Un afficheur pour afficher le code d'activation (CA₁) ;
▪ Au moins une batterie permettant de délivrer une alimentation aux composants dudit dispositif ;
▪ Une interface utilisateur pour définir un code réponse (CR₁) permettant d'activer ou non un service associé à la bouche d'incendie.

13. Dispositif d'accès (1) à une bouche d'incendie selon la revendication 12, **caractérisé en ce qu'**il comporte au moins une première électrovanne pour activer sa fermeture ou son ouverture selon la valeur d'une commande reçue.

14. Dispositif d'accès (1) à un vélo (11) comportant :
▪ Une fixation pour rendre solidaire ledit dispositif (1) d'accès avec un vélo (11) ;
▪ Un verrou actionné par une commande du dispositif (1) afin de bloquer la fonction de roulage du vélo (11) ;
▪ Une interface pour acquérir un signal délivrant une position dudit dispositif (1), ledit signal étant émis à partir d'un système de localisation ou de géolocalisation ;
▪ Un calculateur pour générer un code d'activation (CA₁) encodé à partir de la position du dispositif (1), ledit code d'activation encodant par une compression numérique la position géographique acquise de manière à réduire le nombre de symboles de ladite position acquise;
▪ Un afficheur (2) pour afficher le code d'activation (CA₁) ;
▪ Au moins une batterie permettant de délivrer une alimentation aux composants dudit dispositif, ladite batterie étant alimentée par un système récupérateur de l'énergie cinétique du vélo ;
▪ Une interface utilisateur pour définir un code réponse (CR₁) permettant d'activer ou non un service associé au vélo (11).

15. Système d'accès (1) à un service **caractérisé en ce qu'**il comprend un dispositif selon l'une quelconque des revendications 12 à 14, un terminal mobile (T1) et une entité distante (SERV₁) configurés pour mettre en oeuvre le procédé selon l'une quelconque des revendications 1 à 11.

## Patentansprüche

1. Verfahren zur Aktivierung eines objektbezogenen Dienstes (10, 11), umfassend:
▪ Erwerb (REC_POS) einer Position (POS₁) mittels eines Geolokalisierungssystems einer Vorrichtung (1), die mit dem besagten Objekt fest verbunden ist (10, 11);
▪ Berechnung eines Aktivierungscodes (GEN_CA₁) ausgehend von der erfassten Position (POS₁), des Aktivierungscodes (CA₁), der durch eine numerische Kompression die erfasste geografische Position kodiert, um die Anzahl der Symbole der besagten erfassten Position zu reduzieren;
▪ Anzeige des Aktivierungscodes (AFF_CA) über ein Display (2) des Geräts (1);
▪ Übertragung des Aktivierungscodes (CA₁) über ein elektronisches mobiles Endgerät (T₁) mit drahtloser Schnittstelle zu einem entfernten Objekt (SERV₁) aus einem Datennetz;
▪ Empfang eines Response-Codes (CR₁) vom elektronischen mobilen Endgerät (T₁), wobei der Response-Code (CR₁) vom entfernten Objekt (SERV₁) generiert wird;
▪ Erfassung des Response-Codes (CR₁) durch das Gerät (1);
▪ Decodierung des Response-Codes (CR₁) durch ein Steuergerät und einen Gerätespeicher (1);
▪ Generierung eines Befehls zur Entriegelung eines Dienstes, der mit dem solidarischen Objekt (10, 11) der besagten Einrichtung verbunden ist (1).

2. Verfahren nach Anspruch 1, **dadurch gekennzeichnet, dass** das Verfahren einen Abkürzungsschritt der erfassten Position (POS₁) umfasst, um eine zweite Position (POS₂) zu verarbeiten, die sich aus einer Näherung der Position (POS₁) nach einer vordefinierten Positioniergenauigkeit ergibt.

3. Verfahren nach einem der Ansprüche 1 bis 2, **dadurch gekennzeichnet, dass** die Berechnung eines Aktivierungscodes (CA₁) eine einzige Ziffernfolge erzeugt, wobei der Aktivierungscode (CA₁) durch eine verlustfreie Codierung komprimiert wird.

4. Verfahren nach einem der Ansprüche 1 bis 3, **dadurch gekennzeichnet, dass** es die Übertragung einer Benutzer-ID (ID₁) mittels eines elektronischen mobilen Endgeräts (T₁) umfasst, das eine drahtlose Schnittstelle zum Aufbau einer Datenverbindung zu einer Remote-Einheit (SERV₁) über ein Datennetz (NET) umfasst.

5. Verfahren nach einem der Ansprüche 1 bis 4, **dadurch gekennzeichnet, dass** es die folgenden Schritte umfasst, die von der Ferneinheit (SERV₁) ausgeführt werden:
▪ Entschlüsselung des Aktivierungscodes (CA₁) durch eine DCU und einen Speicher der Remote-Einheit (1);
▪ Vergleich der decodierten Position mit einer Reihe von gespeicherten Positionen in einem Speicher, die jeweils einer Objektkennung zugeordnet sind (10, 11);
▪ Auswahl einer Objektkennung, die einer Position zugeordnet ist, die sich in einem Abstand von der decodierten Position befindet, der unter einem vordefinierten Schwellenwert liegt, und/oder Überprüfung, ob die über eine Terminalschnittstelle (T₁) ausgewählte Objektkennung einer Position zugeordnet ist, die sich in einem Abstand von der decodierten Position unter einem vordefinierten Schwellenwert befindet;
▪ Generieren eines Response-Codes (CR₁) anhand der Objekt-ID und/oder des Aktivierungscodes (CA₁).

6. Verfahren nach einem der vorhergehenden Ansprüche, **dadurch gekennzeichnet, dass** es umfasst:
▪ Befestigung einer Vorrichtung (1) an dem Gegenstand (10, 11).

7. Verfahren nach einem der vorhergehenden Ansprüche, **dadurch gekennzeichnet, dass** es eine Vielzahl von Positionsakquisitionen in regelmäßigen Abständen innerhalb eines Zeitraums umfasst, in dem die Aktivierung des Dienstes erfolgt.

8. Verfahren nach einem der vorhergehenden Ansprüche, **dadurch gekennzeichnet, dass**:
▪ der Aktivierungscode (CA₁) eine Anzahl von Symbolen mit 7 aufweist und/oder
▪ die Erfassung mindestens eines Response-Codes durch das Gerät (1) erfolgt über eine Schnittstelle zur Erfassung des Geräts (1).

9. Verfahren nach einem der Ansprüche 1 bis 8, **dadurch gekennzeichnet, dass**:
- der Gegenstand (10) ist ein Hydrant;
- die Vorrichtung (1) besteht aus einem Zugangsventil, einem Bildschirm (2) und einer Eingabeschnittstelle (3)
- den aktiven Entriegelungsbefehl:
∘ das Ablesen eines Wasserzählers zur Messung eines abgegebenen Durchflusses und/oder
∘ ein erstes Magnetventil zum Öffnen oder Schließen.
- mindestens eine Mikroturbine (43) ist so angeordnet, dass sie einen Teil der Energie zurückgewinnt, die aus dem Ablauf eines Wasserstroms (22) aus dem Hydranten (10) austritt.

10. Verfahren nach einem der Ansprüche 1 bis 9, **dadurch gekennzeichnet, dass** der Gegenstand (11) ein Fahrrad ist und die Vorrichtung (1) eine fest mit dem Fahrrad verbundene Verriegelung, einen Bildschirm (2) und eine Eingabeschnittstelle (3) umfasst.

11. Verfahren nach einem der Ansprüche 1 bis 10, **dadurch gekennzeichnet, dass** es umfasst:
▪ Einleitung einer Aktion zur Erzeugung eines Deaktivierungscodes (CODE_CONS₁);
▪ Anzeige des Deaktivierungscodes (CODE_CONS₁) mittels Gerätedisplay (1);
▪ Übertragung eines Deaktivierungscodes mit der verbrauchten Wassermenge (CONS₁) über ein elektronisches mobiles Endgerät (T₁), wobei das Terminal (T₁) eine drahtlose Schnittstelle zur Verbindung mit einem Datennetz (NET) aufweist;
▪ Empfang eines zweiten Response-Codes (CR₂) vom elektronischen mobilen Endgerät (T₁), wobei der zweite Response-Code (CR₁) von der entfernten Entität (SERV₁) generiert wird;
▪ Erwerb des zweiten Response-Codes (CR₂);
▪ Decodierung des Response-Codes (CR₂) durch ein Steuergerät und einen Gerätespeicher (1);
▪ Generierung eines Befehls zur Sperrung eines Dienstes, der mit dem solidarischen Objekt (10, 11) der besagten Einrichtung (1) verbunden ist,
▪ Deaktivierung des objektbezogenen Dienstes (10, 11).

12. Zugangsvorrichtung (1) zu einem Hydranten (10) mit:
▪ Eine Befestigung zur festen Verbindung der besagten Zugangsvorrichtung (1) mit dem besagten Hydranten (10);
▪ Ein Hydraulikaggregat (4), um ein entnommenes Wasservolumen zu einem Auslass (5) der Vorrichtung (1) zu leiten;
▪ Einen Wasserzähler (41) zur Messung des Wasserverbrauchs;
▪ Eine Schnittstelle zur Erfassung eines Signals, das eine Position des Geräts (1) liefert, wobei das Signal von einem Ortungs- oder Geolokalisierungssystem ausgegeben wird;
▪ Ein Rechner zur Erzeugung eines Aktivierungscodes (CA₁), der von der Position des Geräts (1) aus kodiert wird, wobei der Aktivierungscode durch eine numerische Kompression die erfasste geografische Position kodiert, um die Anzahl der Symbole der besagten erlernten Position zu reduzieren;
▪ Ein Display zur Anzeige des Aktivierungscodes (CA₁);
▪ Mindestens eine Batterie, die die Stromversorgung der Komponenten des Geräts ermöglicht;
▪ Eine Benutzeroberfläche zur Definition eines Response-Codes (CR₁) zur Aktivierung oder Nichtaktivierung einer mit dem Hydranten verbundenen Dienstleistung.

13. Zugangsvorrichtung (1) zu einem Hydranten nach Anspruch 12, **dadurch gekennzeichnet, dass** er mindestens ein erstes Magnetventil aufweist, um sein Schließen oder Öffnen entsprechend dem Wert eines empfangenen Befehls zu aktivieren.

14. Zugangsvorrichtung (1) zu einem Fahrrad (11), umfassend:
▪ Eine Befestigung zur festen Verbindung der Zugangsvorrichtung (1) mit einem Fahrrad (11);
▪ Eine Verriegelung, die durch eine Betätigung der Vorrichtung (1) betätigt wird, um die Fahrfunktion des Fahrrads (11) zu blockieren;
▪ Eine Schnittstelle zur Erfassung eines Signals, das eine Position des Geräts (1) liefert, wobei das Signal von einem Ortungs- oder Geolokalisierungssystem ausgegeben wird;
▪ Ein Rechner zur Erzeugung eines Aktivierungscodes (CA₁), der von der Position des Geräts (1) aus kodiert wird, wobei der Aktivierungscode durch eine numerische Kompression die erfasste geografische Position kodiert, um die Anzahl der Symbole der besagten erlernten Position zu reduzieren;
▪ Ein Display (2) zur Anzeige des Aktivierungscodes (CA₁);
▪ Mindestens eine Batterie, die die Komponenten des Geräts mit Strom versorgt, wobei die Batterie über ein System versorgt wird, das die kinetische Energie des Fahrrads zurückgewinnt;
▪ Eine Benutzeroberfläche zur Definition eines Response-Codes (CR₁) zur Aktivierung oder Nichtaktivierung eines mit dem Fahrrad verbundenen Dienstes (11).

15. Zugangssystem (1) zu einer Dienstleistung, **dadurch gekennzeichnet, dass** es eine Vorrichtung nach einem der Ansprüche 12 bis 14, ein mobiles Endgerät (T1) und eine Remote-Einheit (SERV₁) umfasst, die zur Durchführung des Verfahrens nach einem der Ansprüche 1 bis 11 konfiguriert sind.

## Claims

1. A method for activating a service associated with an object (10, 11) comprising:
▪ Acquiring (REC_POS) a position (POS₁) by means of a geolocation system of a device (1) rigidly attached to said object (10, 11);
▪ Calculating an activation code (GEN_CA₁) based on the acquired position (POS₁), the activation code (CA₁) encoding by digital compression the geographic position acquired so as to reduce the number of symbols of said acquired position;
▪ Displaying the activation code (AFF_CA) by means of a display (2) of the device (1);
▪ Transmitting the activation code (CA₁) by means of an electronic mobile terminal (T₁) including a wireless interface to a remote entity (SERV₁) from a data network;
▪ Receiving a response code (CR₁) by the electronic mobile terminal (T₁), said response code (CR₁) being generated by the remote entity (SERV₁ );
▪ Acquiring said response code (CR₁) by the device (1);
▪ Decoding the response code (CR₁) by a calculator and a memory of the device (1);
▪ Generating a command for unlocking a service associated with the object (10, 11) rigidly attached to said device (1).

2. The method according to claim 1, **characterized in that** the method includes a step of truncating the acquired position (POS₁) in order to process a second position (POS2) resulting from an approximation of the position (POS₁) according to a predefined positioning accuracy.

3. The method according to any of claims 1 to 2, **characterized in that** calculating an activation code (CA₁) generates a unique sequence of digits, said activation code (CA₁) being compressed by lossless coding.

4. The method according to any of claims 1 to 3, **characterized in that** it comprises transmitting a user identifier (101) by means of an electronic mobile terminal (T₁) including a wireless interface for establishing a data link with a remote entity (SERV₁) through a data network (NET).

5. The method according to any of claims 1 to 4, **characterized in that** it comprises the following steps performed by the remote entity (SERV₁):
▪ Decoding the activation code (CA₁) by a calculator and a memory of the remote entity (1);
▪ Comparing the decoded position with a set of positions saved in a memory, each being associated with an object identifier (10, 11);
▪ Selecting an object identifier associated with a position located at a distance from the decoded position lower than a predefined threshold and/or verifying that the object identifier selected by means of a terminal interface (T₁) is associated with a position located at a distance from the decoded position lower than a predefined threshold;
▪ Generating a response code (CR₁) from the object identifier and/or from the activation code (CA₁).

6. The method according to any of the preceding claims, **characterized in that** it comprises:
▪ Fastening a device (1) to said object (10, 11).

7. The method according to any one of the preceding claims, **characterized in that** it comprises a plurality of position acquisition operations at regular intervals during a period in which service activation is performed.

8. The method according to any of the preceding claims, **characterized in that** :
▪ the activation code (CA₁) comprises a number of symbols equal to 7, and/or.
▪ the acquisition of at least one response code by the device (1) is carried out by means of an input interface of the device (1).

9. The method according to any of claims 1 to 8, **characterized in that**:
- the object (10) is a fire hydrant;
- the device (1) comprises an access valve, a screen (2) and an input interface (3),
- the unlocking command activates:
∘ reading a water meter for measuring a delivered flow rate, and/or;
∘ a first solenoid valve to initiate its opening or closing.
- at least one microturbine (43) is arranged to recover part of the energy from the flow of a water flow rate (22) from the fire hydrant (10).

10. The method according to any of claims 1 to 9, **characterized in that** the object (11) is a bicycle and that the device (1) comprises a lock rigidly attached to the bicycle, a screen (2) and an input interface (3).

11. The method according to any of claims 1 to 10, **characterized in that** it comprises:
▪ Initiating an action for generating the deactivation code (CODE_CONS₁);
▪ Displaying the deactivation code (CODE_CONS₁) by means of a display of the device (1);
▪ Transmitting a deactivation code including the volume of water consumed (CONS₁) by means of an electronic mobile terminal (T₁), said terminal (T₁) including a wireless interface to be connected to a data network (NET);
▪ Receiving a second response code (CR₂) by the electronic mobile terminal (T₁), said second response code (CR₁) being generated by the remote entity (SERV₁);
▪ Acquiring said second response code (CR₂);
▪ Decoding the response code (CR₂) by a calculator and a memory of the device (1);
▪ Generating a command for locking a service associated with the object (10, 11) rigidly attached to said device (1),
▪ Deactivation of the service associated to the object (10,11).

12. An access device (1) to a fire hydrant (10) including:
▪ A fastener for making said access device (1) rigidly attached to said fire hydrant (10);
▪ A hydraulic unit (4) for conveying a volume of water taken to an outlet (5) of the device (1);
▪ A water meter (41) for measuring water consumption;
▪ An interface for acquiring a signal delivering a position of said device (1), said signal being emitted from a location or geolocation system;
▪ A calculator for generating an activation code (CA₁) encoded from the position of the device (1), said activation code encoding by digital compression the geographic position acquired so as to reduce the number of symbols of said acquired position;
▪ A display for displaying the activation code (CA₁);
▪ At least one battery to supply power to the components of said device;
▪ A user interface to define a response code (CR₁) to activate or not a service associated with the fire hydrant.

13. The access device (1) to a fire hydrant according to claim 12, **characterized in that** it includes at least a first solenoid valve to activate its closing or opening according to the value of a command received.

14. An access device (1) to a bicycle (11) including:
▪ A fastener for making said access device (1) rigidly attached to a bicycle (11);
▪ A lock actuated by a command of the device (1) in order to block the riding function of the bicycle (11);
▪ An interface for acquiring a signal delivering a position of said device (1), said signal being emitted from a location or geolocation system;
▪ A calculator for generating an activation code (CA₁) encoded from the position of the device (1), said activation code encoding by digital compression the geographic position acquired so as to reduce the number of symbols of said acquired position;
▪ A display (2) for displaying the activation code (CA₁);
▪ At least one battery for supplying power to the components of said device, said battery being powered by a system that recovers the kinetic energy of the bicycle;
▪ A user interface for defining a response code (CR₁) to activate or not a service associated with the bicycle (11).

15. An access system (1) to a service **characterized in that** it comprises a device according to any of claims 12 to 14, a mobile terminal (T₁) and a remote entity (SERV₁) configured to implement the method according to any of claims 1 to 11.
